# EUROPÄISCHE PATENTANMELDUNG

(11) **EP 2 871 385 A1**
(43) Veröffentlichungstag der Anmeldung: **13.05.2015**
(21) Anmeldenummer: 14188608.5
(22) Anmeldetag: 13.10.2014
(51) Int. Cl.: F16F 1/38, B60G 7/00

(54) **Achslenker für ein Fahrwerk eines Fahrzeugs**

(30) Priorität: 07.11.2013 DE 202013105002 U
(71) Anmelder: HEMSCHEIDT FAHRWERKTECHNIK GmbH & Co. KG, 42781 Haan-Gruiten (DE)
(72) Erfinder: Naploszek, Hartwig, 45289 Essen (DE); Wöhrmann, Mark, 40723 Hilden (DE)
(74) Vertreter: Patentanwälte Dr. Solf & Zapf

(57) **Zusammenfassung**

Die vorliegende Erfindung betrifft einen Achslenker (1), insbesondere für Nutzfahrzeuge, aufweisend zwei über einen Stangenkörper (2) verbundene Lagerhülsen (3). In den Lagerhülsen (3) ist jeweils ein Lager (5) mit einer Pratze (7) zur Befestigung mit einem Fahrwerk eines Fahrzeuges angeordnet. Der Stangenkörper (2) und die Lagerhülsen (3) sind aus zwei gleich ausgebildeten, im Bereich der Lagerhülsen (3) ineinander gesteckten Achslenker-Halbschalen gebildet.

## Beschreibung

Die Erfindung betrifft einen Achslenker, insbesondere für Nutzfahrzeuge, aufweisend zwei über einen Stangenkörper verbundene Lagerhülsen, wobei in die Lagerhülsen jeweils ein Lager mit einer Pratze zur Befestigung mit einem Fahrwerk eines Fahrzeuges angeordnet ist.

Derartige Achslenker werden als Teil des Fahrwerks eines Fahrzeuges verwendet. Sie sind in der Regel längs oder schräg zur Fahrtrichtung des Fahrzeuges eingebaut und über die Lager mit dessen Fahrwerk beweglich und/oder dämpfend verbunden. Die Achslenker nehmen insbesondere die beim Beschleunigen, Bremsen und/oder Kurvenfahren auftretenden horizontalen Kräfte auf, wobei sie die vertikalen Bewegungen der Federung zulassen.

Nutzfahrzeuge werden im Vergleich zu Personenkraftwagen besonders hohen Belastungen ausgesetzt. Bekannte Achslenker für Nutzfahrzeuge bestehen zum Beispiel aus einer geschmiedeten und geschweißten Stahlstange. Diese haben jedoch den Nachteil, dass sie relativ schwer sind, in der Herstellung aufwändig sind und relativ hohe Kosten verursachen.

Bekannte Achslenker für Personenkraftwagen werden zum Beispiel einstückig aus einem Blechumformteil hergestellt, wobei zwei Achslenker-Hälften geformt und zusammengeklappt werden. Die dafür benötigten Werkzeuge und Herstellverfahren sind jedoch aufwändig und kostenintensiv, so dass diese einstückigen Umformverfahren insbesondere für Nutzfahrzeuge mit kleineren Stückzahlen unwirtschaftlich sind. Zudem wird durch die einstückige Ausbildung als Blechumformteil im Bereich der Lagerhülsen ein Spalt erzeugt, der sich nachteilig auswirkt.

Der Erfindung liegt die Aufgabe zugrunde, einen Achslenker zur Verfügung zu stellen, der Gewichtseinsparungen gegenüber herkömmlichen Achslenkern ermöglicht und gleichzeitig eine ausreichende Betriebsfestigkeit zur Verfügung stellt sowie in der Herstellung einen möglichst geringen Aufwand verursacht.

Diese Aufgabe wird erfindungsgemäß dadurch gelöst, dass der Stangenkörper und die Lagerhülsen des Achslenkers aus zwei gleich ausgebildeten, im Bereich der Lagerhülsen ineinander gesteckten Achslenker-Halbschalen gebildet sind. Dabei ist es vorteilhaft, wenn die Achslenker-Halbschalen einteilig als gestanzte Blechumformteile ausgebildet sind. Die Herstellung der Achslenker-Halbschalen kann mittels einfacher Umformwerkzeuge und einfacher Umform-Herstellungsverfahren durchgeführt werden. Insbesondere können diese einfachen Werkzeuge und Herstellverfahren auch wirtschaftlich an verschiedene Größen von Achslenkern angepasst werden. Zudem wird dadurch Material und damit auch Gewicht eingespart.

In einer bevorzugten Ausführungsform der Erfindung weisen die Achslenker-Halbschalen jeweils an einem Ende eine angeformte innere Hülsenhälfte und an dem anderen Ende eine angeformte äußere Hülsenhälfte auf, wobei die innere Hülsenhälfte und die äußere Hülsenhälfte derart ausgebildet sind, dass sie zur Bildung der Lagerhülsen ineinandersteckbar ausgebildet sind. Dies ermöglicht eine besonders einfache Herstellung des Achslenkers durch einfaches Einstecken der Hülsenhälften der beiden Achslenker-Halbschalen. Zudem wird eine Spaltbildung im Bereich der Lagerhülsen vermieden.

Insbesondere weisen die Achslenker-Halbschalen an ihren Längsrändern umgebogene Randansätze zur Stabilisierung gegen Biegekräfte auf. Vorteilhafterweise sind die Achslenker-Halbschalen aus einem hochfesten und gleichzeitig umformbaren Stahl ausgebildet. Dies ermöglicht, die für Nutzfahrzeuge hohe Biegefestigkeit zu erreichen, wobei gleichzeitig die Herstellung mittels eines wirtschaftlich günstigen Umformverfahrens ermöglicht wird.

In einer weiteren Ausführungsform der Erfindung sind die Lager in einer Teilungsebene in zwei Lager-Halbschalen unterteilt, wobei die zwei Lager-Halbschalen unter radialer Vorspannung in die Lagerhülse eingesetzt sind. Dies ermöglicht eine einfache Montage des Lagers.

In einer weiteren Ausgestaltung der Erfindung umfasst die Lager-Halbschale eine Außenschale und eine Innenschale, wobei zwischen der Außenschale und der Innenschale eine Federschicht aus einem federelastischen Material angeordnet ist. Vorteilhafterweise weist die Innenschale eine im Querschnitt polygonale Innenkontur, und die Pratze eine zur Innenkontur der Innenschale passende Außenkontur an ihrem Außenumfang auf. Dadurch werden Torsionskräfte und Drehkräfte an der Pratze besser an die Innenschale des Lagers übertragen.

Vorteilhafterweise weist die Innenkontur der Innenschale umfangsgemäß verteilte konvexe Erhebungen, und die Pratze mehrere an ihrem Außenumfang verteilte konkave Vertiefungen zur Aufnahme der Erhebungen der Innenschale auf. Dies sichert die Pratze gegen axiale Bewegungen in dem Lager und überträgt axiale Kräfte von der Pratze auf die Innenschale des Lagers.

Weitere Ausführungsformen und vorteilhafte Gestaltungen der Erfindung sind in der folgenden Beschreibung beschrieben und in den Figuren dargestellt.

Es zeigen:
- Fig. 1: eine Seitenansicht der Längsseite eines erfindungsgemäßen Achslenkers senkrecht zu den Lagerachsen,
- Fig. 2: eine Seitenansicht der Längsseite eines erfindungsgemäßen Achslenkers in Richtung der Lagerachsen,
- Fig. 3: eine Seitenansicht der Längsseite einer Achslenker-Halbschale eines erfindungsgemäßen Achslenkers senkrecht zu den Lagerachsen,
- Fig. 4: eine Seitenansicht der Längsseite einer Achslenker-Halbschale eines erfindungsgemäßen Achslenkers in Richtung der Lagerachsen,
- Fig. 5: eine Seitenansicht der Längsseite einer Lager-Halbschale eines erfindungsgemäßen Achslenkers in Richtung der Lagerachsen im unmontierten Zustand,
- Fig. 6: eine Seitenansicht der Stirnseite einer Lager-Halbschale eines erfindungsgemäßen Achslenkers senkrecht zu den Lagerachsen im unmontierten Zustand,
- Fig. 7: eine Seitenansicht der Längsseite einer Lager-Halbschale eines erfindungsgemäßen Achslenkers in Richtung der Lagerachsen im montierten vorgespannten Zustand,
- Fig. 8: eine Seitenansicht der Stirnseite einer Lager-Halbschale eines erfindungsgemäßen Achslenkers senkrecht zu den Lagerachsen im montierten vorgespannten Zustand,
- Fig. 9: eine Ansicht einer Pratze eines erfindungsgemäßen Achslenkers.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

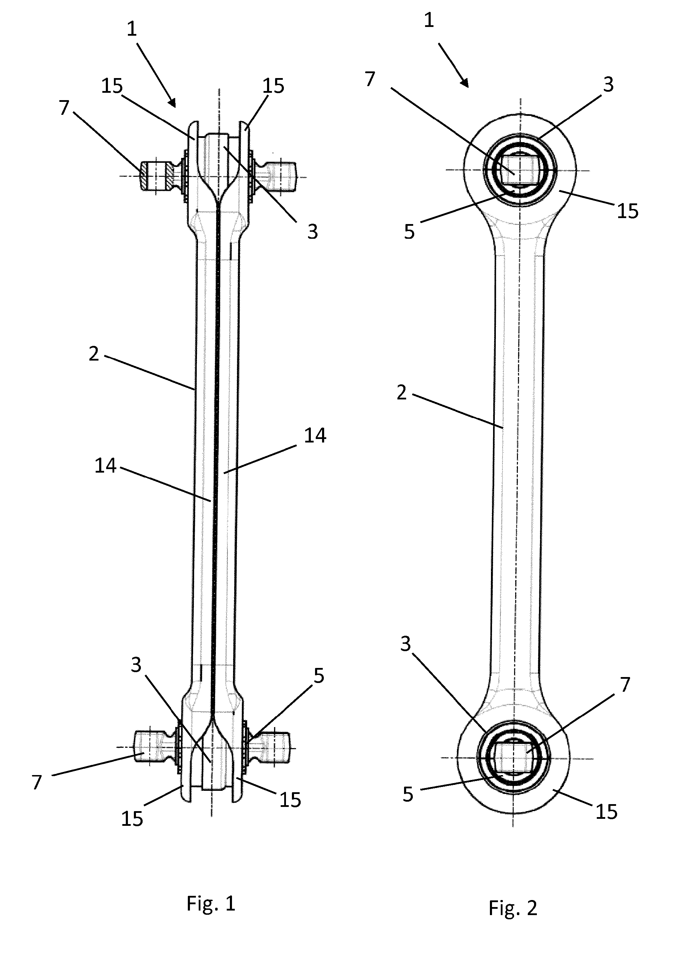

In Fig. 1 und Fig. 2 ist eine Ausführungsform eines erfindungsgemäßen Achslenkers 1 für ein Fahrwerk eines Fahrzeugs dargestellt. Der Achslenker 1 besteht aus einem länglichen Stangenkörper 2, der an seinen beiden Enden jeweils eine Lagerhülse 3 bildet. In den Lagerhülsen 3 ist jeweils ein dämpfendes Lager 5 eingesetzt. In dem Lager 5 ist eine Pratze 7 eingesetzt. Die Pratze 7 dient insbesondere zur Befestigung des Achslenkers 1 mit einem nicht dargestellten Fahrwerk eines Fahrzeugs.

Der Stangenkörper 2 des erfindungsgemäßen Achslenkers 1 umfasst zwei gleich ausgebildete und ineinander gesteckte Achslenker-Halbschalen 11.

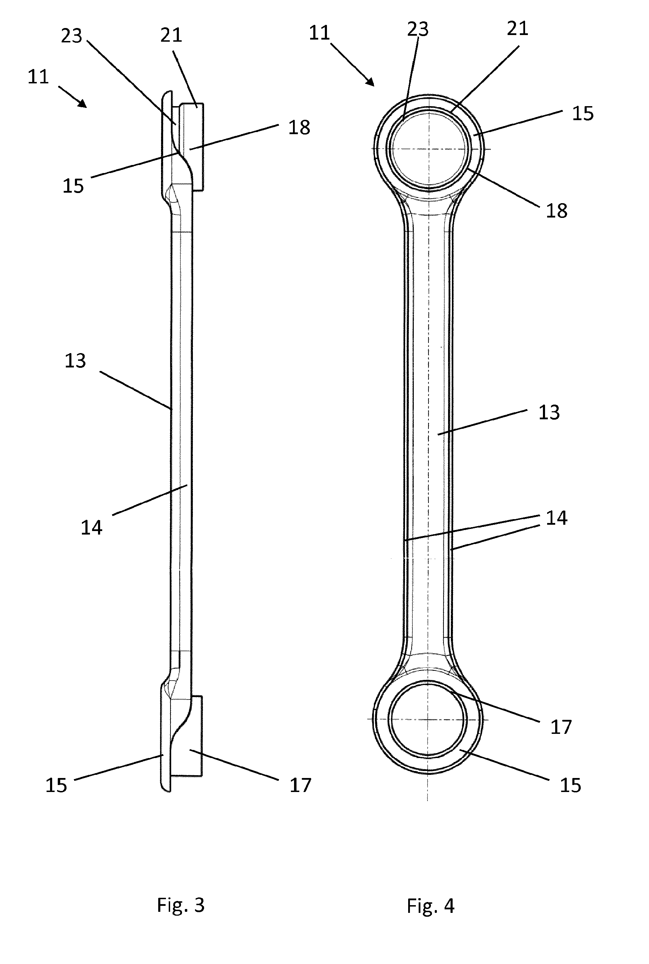

Eine erfindungsgemäße Ausführungsform der Achslenker-Halbschale 11 ist in Fig. 3 und Fig. 4 dargestellt. Die Achslenker-Halbschale 11 ist insbesondere als ein Blechumformteil ausgebildet und besteht insbesondere aus einem festen und gleichzeitig umformbaren Stahl. Dies bedeutet im Sinne der Erfindung einen Stahl, der eine Bruchdehnung zwischen 20 Prozent und 70 Prozent und gleichzeitig eine Dehngrenze zwischen 400 und 1000 MPa aufweist. Besonders vorteilhaft ist es, wenn der verwendete Stahl ein Zugfestigkeitsniveau von über 800 MPa kombiniert mit einer Bruchdehnung von über 50 Prozent und einer Gleichmaßdehnung von 45 Prozent aufweist. Vorteilhafterweise besteht die Achslenker-Halbschale 11 aus einem Fe-Mn-Al-Si-Stahl. Zur Messung wird ein Zugversuch nach EN ISO 6892-1 verwendet.

Die Achslenker-Halbschale 11 ist insbesondere einteilig aus einem gestanzten Blech geformt. Dabei umfasst die Achslenker-Halbschale 11 ein mittiges, längliches Verbindungsblech 13, an den beidseitig insbesondere ringförmige Ansätze 15 angeformt sind. Das Verbindungsblech 13 ist vorteilhafterweise durch Umformung an den Längsseiten senkrecht in Richtung der gegenüberliegenden Achslenker-Halbschale 11 im Querschnitt U-förmig ausgebildet, so dass an den Längsseiten jeweils ein Stabilisierungsblech 14 ausgebildet ist. Das Stabilisierungsblech 14 dient insbesondere zur Verstärkung der Biegefestigkeit der Achslenker-Halbschale 11 und des Achslenkers 1.

Die Ansätze 15 der Achslenker-Halbschale 11 bilden an ihrem Innenumfang einerseits eine innere Hülsenhälfte 17 und andererseits eine äußere Hülsenhälfte 18. Die innere Hülsenhälfte 17 und die äußere Hülsenhälfte 18 sind insbesondere als senkrecht zum Verbindungsblech 13 in Richtung der gegenüberliegenden Achslenker-Halbschale 11 abstehende hohlzylinderförmige Ansätze ausgebildet. Die innere Hülsenhälfte 17 ist vorteilhafterweise als rohrförmiger Ansatz mit einem konstanten Innendurchmesser und konstantem Außendurchmesser ausgebildet. Die äußere Hülsenhälfte 18 weist einen ersten Hülsenbereich 21 und einen zweiten Hülsenbereich 23 auf. Der Innendurchmesser des ersten Hülsenbereichs 21 entspricht vorteilhafterweise dem Innendurchmesser der inneren Hülsenhälfte 17. Der Innendurchmesser des zweiten Hülsenbereichs 23 entspricht vorteilhafterweise dem Außendurchmesser der inneren Hülsenhälfte 17.

Bei der Herstellung des Achslenkers 1 wird die innere Hülsenhälfte 17 der ersten Achslenker-Halbschale 11 in den zweiten Hülsenbereich 23 der äußeren Hülsenhälfte 18 der gegenüberliegenden zweiten Achslenker-Halbschale 11 eingesteckt und umgekehrt. Dabei nehmen die äußeren Hülsenhälften 18 der Achslenker-Halbschalen 11 die inneren Hülsenhälften 17 der gegenüberliegenden Achslenker-Halbschale 11 zumindest teilweise auf, so dass die beiden Lagerhülsen 3 jeweils aus der inneren Hülsenhälfte 17 der einen Achslenker-Halbschale 11 und dem ersten Hülsenbereich 21 der äußeren Hülsenhälfte 18 der anderen Achslenker-Halbschale 11 gebildet werden. Bei der Herstellung der Achslenker-Halbschalen 11 werden die Lageransätze 15 mit ihren Hülsenhälften 17, 18 insbesondere durch entsprechendes Stanzen und Umformung des Blechs einteilig zusammen mit dem Verbindungsbereich 13 erzeugt. Vorteilhafterweise ist die Länge der Hülsenhälften 17, 18 und die Breite des Stabilisierungsblechs 14 der Achslenker-Halbschalen 11 derart aneinander angepasst, dass im eingesteckten Zustand der Hülsenhälften 17, 18 die sich gegenüberliegenden Stabilisierungsbleche 14 der beiden Achslenker-Halbschalen 11 mit Ihren Seitenrändern nicht aneinander anliegen. Durch das Ineinanderfügen der jeweils sich gegenüberliegenden Hülsenhälften 17, 18 der beiden Achslenker-Halbschalen 11 wird eine Spaltbildung im Bereich der Lagerhülsen 3 des Achslenkers 1 vermieden.

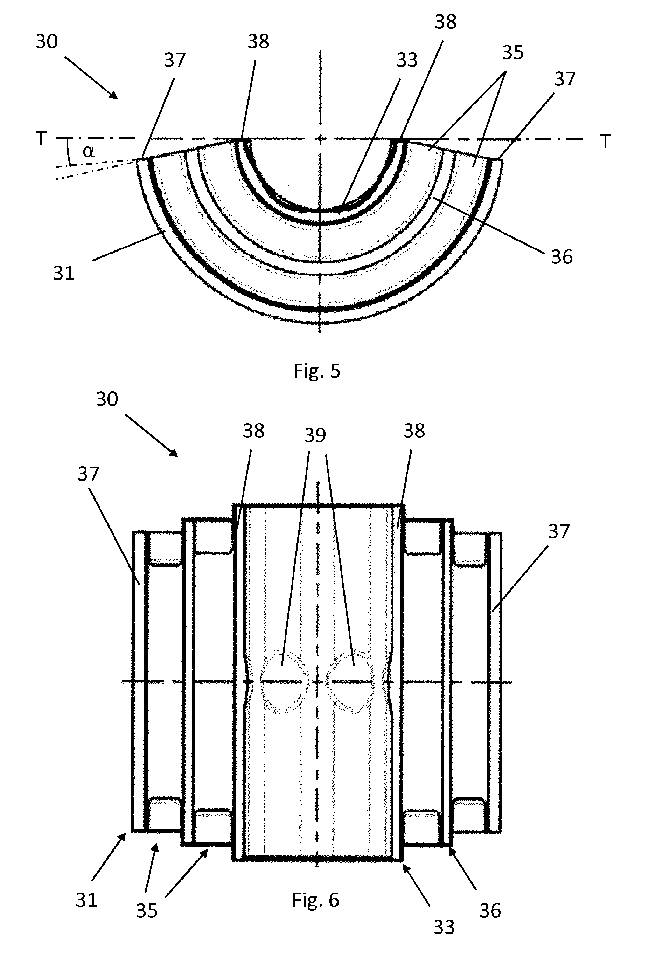

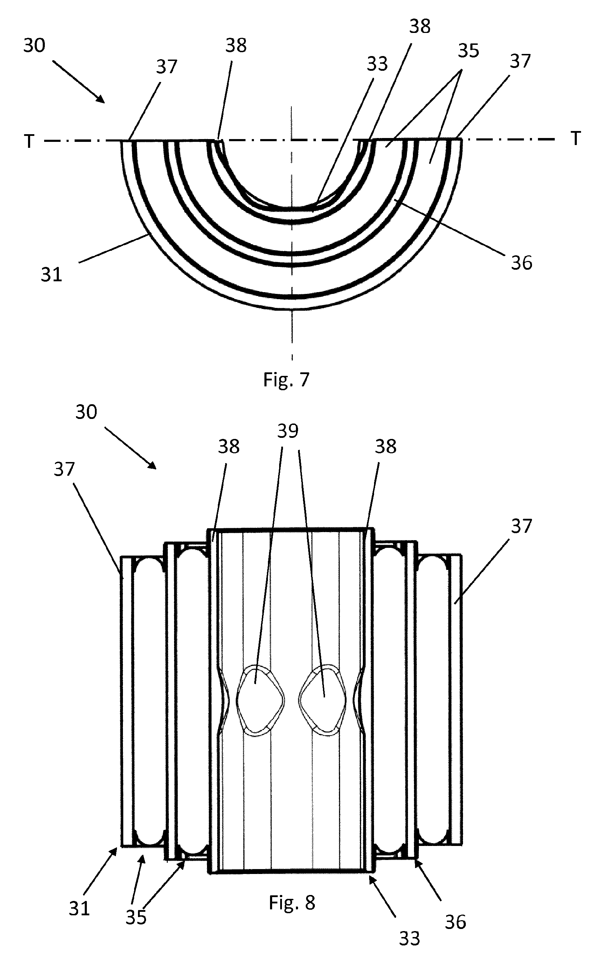

Die in die Lagerhülsen 3 eingesetzten Lager 5 sind insbesondere jeweils aus zwei Lager-Halbschalen 30 gebildet, die vorteilhafterweise jeweils einer Hälfte eines in einer Teilungsebene T-T mittig geteilten Lagers 5 entsprechen. Eine Ausführungsform der erfindungsgemäßen Lager-Halbschale 30 ist in den Fig. 5 und 6 im nicht eingebauten, nicht vorgespannten Zustand und in den Fig. 7 und 8 im für den Einbau vorgespannten Zustand dargestellt.

Die erfindungsgemäße Lager-Halbschale 30 umfasst zumindest eine Außenschale 31 und eine Innenschale 33. Die Außenschale 31 und die Innenschale 33 sind insbesondere aus Kunststoff, Stahl oder Aluminium hergestellt. Zwischen der Außenschale 31 und der Innenschale 33 ist mindestens eine Federschicht 35 aus einem federelastischen Material, insbesondere aus einem Gummi, angeordnet. In einer bevorzugten Ausführungsform ist mindestens eine insbesondere aus Kunststoff, Stahl oder Aluminium hergestellte Zwischenschale 36 zwischen der Außenschale 31 und der Innenschale 33 angeordnet. Insbesondere ist im vorliegen Fall zwischen jeweils zwei Schalen eine Federschicht 35 angeordnet. Die Federschichten 35 sind insbesondere mit den angrenzenden Schalen, vorteilhafterweise stoffschlüssig, verbunden.

Die Außenschale 31 und die Innenschale 33 weisen an ihren der anderen Lager-Halbschale 30 im in der Lagerhülse 3 eingebauten Zustand zugewandten Enden Stirnflächen 37 der Außenschalen 31 und Stirnflächen 38 der Innenschalen 33 auf. Wie in Fig. 5 und Fig. 6 ersichtlich, ist die Außenschale 31 im nicht vorgespannten Zustand mit einem vergrößerten Radius im Vergleich zum Radius im vorgespannten Zustand ausgebildet und bildet einen Kreisbogen des Lagers 5 von weniger als 180 °, vorteilhafterweise einen Kreisbogen zwischen 150 ° und 180 °, insbesondere einen Kreisbogen von 156 °. Die Stirnfläche 37 der Außenschale 31 verläuft im nicht vorgespannten Zustand in einem spitzen Winkel α zur Teilungsebene T-T. Der Winkel α ist vom Betrag derart an den Radius der Außenschale 31 im nicht vorgespannten Zustand angepasst, dass die Stirnflächen 37 der Außenschale 31 im eingebauten beziehungsweise vorgespannten Zustand parallel zur Teilungsebene T-T verläuft. Der Winkel α liegt vorteilhafterweise zwischen 9 ° und 5 °, insbesondere bei 6,5 °.

Für den Einbau der Lager-Halbschalen 30 in die Lagerhülsen 3 wird eine radiale Vorspannkraft erzeugt, die insbesondere auf den Außenumfang der Außenschale 31 wirkt. Dabei werden die Federschichten 35 zwischen der Außenschale 31 und der Innenschale 33 zusammengedrückt, und die Außenschale 31 in Richtung der Innenschale 33 gebogen.

Wie in Fig. 7 und Fig. 8 dargestellt, verschieben sich durch die Biegung der Außenschale 31 die Stirnseiten 37, so dass die Lager-Halbschalen 30 im vorgespannten Zustand jeweils einen Kreisbogen von 180 ° des Gesamtumfangs eines Lagers 5 bilden. Dadurch liegen die Stirnseiten 37 der Außenschalen 31 der beiden Lager-Halbschalen 30 im in der Lagerhülse 3 eingebauten vorgespannten Zustand in der Teilungsebene T-T des Lages 5 plan aneinander an.

Die Stirnflächen 38 der Innenschale 33 verlaufen sowohl im nicht vorgespannten als auch im vorgespannten Zustand parallel zueinander und zur Teilungsebene T-T. Die Innenschale 33 bildet in beiden Zuständen einen 180 ° Kreisbogen des Gesamtumfangs des Lagers 5.

Vorteilhafterweise weist die Innenschale 33 an ihrem Innenumfang eine polygonale Innenkontur auf. Dadurch bilden die beiden Innenschalen 33 der beiden Lager-Halbschalen 30 zusammen im eingebauten Zustand eine Lageröffnung mit einem polygonalen Querschnitt, insbesondere mit einem achteckigen Querschnitt, zur Aufnahme der Pratze 7. In einer bevorzugten Ausführungsform der Innenschale 33 weist die Innenkontur umfangsgemäß verteilte konvexe Erhebungen 39 auf. Die Erhebungen 39 sind insbesondere in axialer Richtung in der Mitte der Innenschalen 33 angeordnet.

Zur Montage wird die Pratze 7 in die Innenschalen 33 des Lagers 5 eingesetzt, bevor das Lager 5 in die Lagerhülse 3 des Achslenkers 1 eingesetzt wird. Insbesondere wird die Pratze 7 zwischen die Innenschalen 33 geklemmt oder stoffschlüssig mit den Innenschalen 33 verbunden, insbesondere verklebt. Die Pratze 7 weist einen zum Innenumfang der Innenschalen 33 passenden Außenumfang auf, so dass sie gegen ein Verdrehen in den Innenschalen 33 formschlüssig gesichert ist.

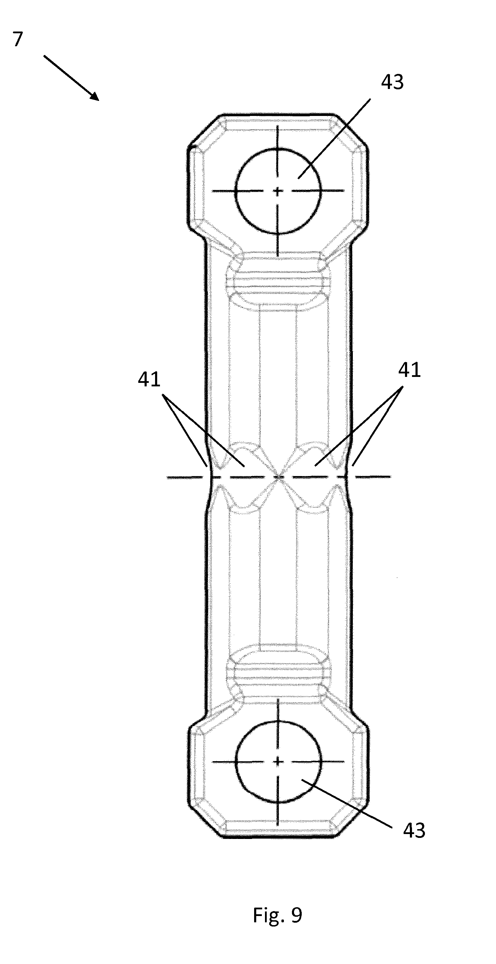

Wie in Fig. 9 dargestellt, weist die Pratze 7 vorteilhafterweise einen polygonalen, insbesondere im Querschnitt achteckigen, Außenumfang auf. In einer bevorzugten Ausführungsform weist die Pratze 7 mehrere an ihrem Außenumfang verteilte konkave Vertiefungen 41 auf, die derart ausgebildet sind, dass die konvexen Erhebungen 39 der Innenschalen 33 in die konkaven Vertiefungen 41 eingreifen und die Pratze 7 in dem Lager 5 gegen eine axiale Verschiebung im Lager 5 formschlüssig sichern. In einer nicht dargestellten Ausführungsform sind alternativ an der Innenkontur der Innenschale (33) konkave Vertiefungen und an dem Außenumfang der Pratze (7) konvexe Erhebungen angeordnet.

Die Pratze 7 weist an ihren beiden Enden jeweils ein Durchgangsloch 43 auf, das zur Befestigung der Pratze 7 an dem nicht dargestellten Fahrwerk des Fahrzeugs dient. Dabei ist es besonders vorteilhaft, wenn das Durchgangsloch 43 bei der Herstellung gestanzt wird. Die Pratze 7 ist insbesondere aus Stahl oder Aluminium hergestellt.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sind. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann.

## Patentansprüche

1. Achslenker (1), insbesondere für Nutzfahrzeuge, aufweisend zwei über einen Stangenkörper (2) verbundene Lagerhülsen (3), wobei in den Lagerhülsen (3) jeweils ein Lager (5) mit einer Pratze (7) zur Befestigung mit einem Fahrwerk eines Fahrzeuges angeordnet ist,
**dadurch gekennzeichnet, dass**
der Stangenkörper (2) und die Lagerhülsen (3) aus zwei gleich ausgebildeten, im Bereich der Lagerhülsen (3) ineinander gesteckten Achslenker-Halbschalen (11) gebildet sind.

2. Achslenker (1) nach Anspruch 1,
**dadurch gekennzeichnet, dass**
die Achslenker-Halbschalen (11) einteilig als gestanzte Blechumformteile ausgebildet sind.

3. Achslenker (1) nach Anspruch 1 oder 2,
**dadurch gekennzeichnet, dass**
die Achslenker-Halbschalen (11) jeweils an einem Ende eine angeformte innere Hülsenhälfte (17) und an dem anderen Ende eine angeformte äußere Hülsenhälfte (18) aufweisen, wobei die innere Hülsenhälfte (17) und die äußere Hülsenhälfte (18) derart ausgebildet sind, dass sie zur Bildung der Lagerhülsen (3) ineinandersteckbar ausgebildet sind.

4. Achslenker (1) nach einem der Ansprüche 1 bis 3,
**dadurch gekennzeichnet, dass**
die Achslenker-Halbschalen (11) an ihren Längsrändern umgebogene Randansätze (14) zur Stabilisierung gegen Biegekräfte aufweisen.

5. Achslenker (1) nach einem der Ansprüche 1 bis 4,
**dadurch gekennzeichnet, dass**
die Achslenker-Halbschalen (11) aus einem festen und gleichzeitig umformbaren Stahl ausgebildet sind.

6. Achslenker (1) nach einem der Ansprüche 1 bis 5,
**dadurch gekennzeichnet, dass**
die Lager (5) in einer Teilungsebene (T-T) in zwei Lager-Halbschalen (30) unterteilt sind, wobei die zwei Lager-Halbschalen (30) unter radialer Vorspannung in die Lagerhülse (3) eingesetzt sind.

7. Achslenker (1) nach Anspruch 6,
**dadurch gekennzeichnet, dass**
die Lager-Halbschale (30) eine Außenschale (31) und eine Innenschale (33) umfasst, wobei zwischen der Außenschale (31) und der Innenschale (33) eine Federschicht (35) aus einem federelastischen Material angeordnet ist.

8. Achslenker (1) nach Anspruch 7,
**dadurch gekennzeichnet, dass**
zwischen der Außenschale (31) und der Innenschale (33) eine Zwischenschale (36) angeordnet ist, wobei zwischen der Außenschale (31) und der Zwischenschale (36) und zwischen der Zwischenschale (36) und der Innenschale (33) jeweils eine Federschicht (35) angeordnet ist.

9. Achslenker (1) nach Anspruch 7 oder 8,
**dadurch gekennzeichnet, dass**
die Federschicht (35) mit der Außenschale (31) und/oder der Innenschale (33) und/oder der Zwischenschale (35) stoffschlüssig verbunden ist.

10. Achslenker (1) nach einem der Ansprüche 7 bis 9,
**dadurch gekennzeichnet, dass**
sich die Innenschale (33) über einen Kreisbogen von 180 ° des Lagers (5) und die Außenschale (31) über einen Kreisbogen zwischen 180 ° und 150 ° des Lagers (5) erstreckt.

11. Achslenker (1) nach einem der Ansprüche 7 bis 10,
**dadurch gekennzeichnet, dass**
die im eingebauten Zustand in der Teilungsebene (T-T) liegenden Stirnflächen (37) der Außenschale (31) in einem nicht vorgespannten Zustand in einem spitzen Winkel (a) zu der Teilungsebene T-T verlaufen.

12. Achslenker (1) nach einem der Ansprüche 7 bis 11,
**dadurch gekennzeichnet, dass**
die Innenschale (33) eine im Querschnitt polygonale Innenkontur und die Pratze (7) eine zur Innenkontur der Innenschale (33) passende Außenkontur an ihrem Außenumfang aufweist.

13. Achslenker (1) nach einem der Ansprüche 7 bis 12,
**dadurch gekennzeichnet, dass**
die Pratze (7) mit der Innenschale (33) stoffschlüssig verbunden ist.

14. Achslenker (1) nach einem der Ansprüche 7 bis 13,
**dadurch gekennzeichnet, dass**
die Innenkontur der Innenschale (33) umfangsgemäß verteilte konvexe Erhebungen (39) aufweist.

15. Achslenker (1) nach einem der Ansprüche 7 bis 14,
**dadurch gekennzeichnet, dass**
die Pratze (7) mehrere an ihrem Außenumfang verteilte konkave Vertiefungen (41) zur Aufnahme der Erhebungen (39) der Innenschale (33) aufweist.
